# EUROPEAN PATENT SPECIFICATION

(11) **EP 3 561 328 B1**
(45) Date of publication and mention of the grant of the patent: **02.04.2025**
(21) Application number: 18893333.7
(22) Date of filing: 27.11.2018
(51) Int. Cl.: F16C 35/063, B21D 39/00, B21J 9/02, B21K 1/05, B60B 35/02, F16C 19/18, F16C 25/08, F16C 41/00, F16C 43/04, B21K 25/00

(54) **HUB-UNIT-BEARING MANUFACTURING METHOD, HUB-UNIT-BEARING MANUFACTURING DEVICE, USE OF THE DEVICE FOR MANUFACTURING A VEHICLE HUB-UNIT-BEARING**
VERFAHREN UND VORRICHTUNG ZUR HERSTELLUNG EINES NABENLAGERS, VERWENDUNG DER VORRICHTUNG ZUR HERSTELLUNG EINES NABENLAGERS FÜR EIN FAHRZEUG
PROCÉDÉ ET DISPOSITIF DE FABRICATION DE PALIER D'UNITÉ DE MOYEU, ET UTILISATION DU DISPOSITIF POUR LA FABRICATION D'UN PALIER D'UNITÉ DE MOYEU DE VÉHICULE

(30) Priority: 10.01.2018 JP 2018001588
(43) Date of publication of application: 30.10.2019
(73) Proprietor: NSK LTD., Shinagawa-ku, Tokyo 141-8560 (JP)
(72) Inventor: HAGIWARA, Nobuyuki, Fujisawa-shi, Kanagawa 2518501 (JP)
(74) Representative: Luten, Martin Haaije
(86) International application number: PCT/JP2018/043594
(87) International publication number: WO 2019/138711

(56) References cited:
- WO-A1-2016/194866
- JP-A- 2003 021 153
- JP-A- 2003 028 179
- JP-A- 2006 038 189
- JP-A- 2006 052 801
- JP-A- 2013 002 495
- JP-A- H1 144 319
- JP-A- S60 253 943
- US-A1- 2005 126 005

## Description

### [Technical Field]

The present invention relates to a method of manufacturing a hub unit bearing which rotatably supports a wheel of a vehicle with respect to a suspension system; a manufacturing device thereof; and a use of the manufacturing device.

### [B ackground Art]

Generally, hub unit bearings are used in a state in which a pre-load is applied. When a pre-load does not fall within an appropriate range, problems occur in that a sufficient strength or service life is not secured, a low torque cannot be sufficiently achieved, or the like. These problems may affect steering stability or ride comfort of the automobile. Therefore, a pre-load needs to be within an appropriate range in hub unit bearings.

On the other hand, Japanese Patent Application, Publication No. 2009-248595 (Patent Document 1) describes a hub unit bearing to which a pre-load according to the amount of caulking of an axial end portion of a hub wheel is applied. In the hub unit bearing, a hub rotating together with a wheel includes the hub wheel and an inner wheel externally fitted to the hub wheel and fixed to the hub wheel by caulking the axial end portion of the hub wheel. Also, Patent Document 1 describes a method of determining a pre-load after completing an operation of forming a caulking part in order to perform pre-load management for such a hub unit bearing.

Further, conventionally, as a method of caulking an axial end portion of a hub wheel, rotary caulking in which a caulking die that performs rotary rotation is pressed against the axial end portion of the hub wheel is widely known. Japanese Patent Application, Publication No. 2017-18991 (Patent Document 2), Japanese Patent Application, Publication No. 2017-67254 (Patent Document 3), and Japanese Patent Application, Publication No. 2017-106510 (Patent Document 4) describe methods and devices for caulking an axial end portion of a hub wheel so that an unbalanced load is not applied.

Patent document JP 11-44319 A (Patent Document 5), on which the preamble of independent claims 1 and 7 is based, relates to a pre-load applying device of a bearing when caulking work is started by gradually lowering a caulking die of a swinging type caulking device, a pre-load is applied to a combinational bearing from a certain time 10, and rotational torque T changes. When its change width reaches a preset prescribed width Δ, it is judged that the pre-load reaches a prescribed value, and caulking work is finished. Therefore, a pre-load can be adjusted at caulking work time of the combinational bearing.

### [Citation List]

[Patent Document 1]
   Japanese Patent Application, Publication No. 2009-248595
[Patent Document 2]
   Japanese Patent Application, Publication No. 2017-18991
[Patent Document 3]
   Japanese Patent Application, Publication No. 2017-67254
[Patent Document 4]
   Japanese Patent Application, Publication No. 2017-106510
[Patent Document 5]
   Japanese Patent Application, Publication No. H11 44319 A

### [Summary of Invention]

### [Technical Problem]

In the method described in Patent Document 1 (Japanese Patent Application, Publication No. 2009-248595), since a pre-load is determined after an operation of forming a caulking part is competed, basically, there is a problem in that adjustment of the pre-load cannot be performed thereafter, even when it is found that the pre-load does not fall within an appropriate range as a result of the determination.

An objective of the present invention is to provide a specific means capable of causing a pre-load to fall within an appropriate range.

### [Solution to Problem]

The presently claimed invention relates to a method according to claim 1 and a manufacturing device of a hub unit bearing according to claim 7.

A hub unit bearing to be manufactured according to the present invention may include an outer wheel having a plurality of rows of outer wheel trajectories on an inner circumferential surface thereof, a hub having a plurality of rows of inner wheel trajectories on an outer circumferential surface thereof, and a plurality of rolling elements disposed between the plurality of rows of the inner wheel trajectories and the plurality of rows of the outer wheel trajectories. The hub includes a hub wheel and an inner wheel externally fitted to the hub wheel and fixed to the hub wheel by caulking an axial end portion of the hub wheel. A pre-load according to an amount of caulking of the axial end portion of the hub wheel is applied.

The method of manufacturing a hub unit bearing according to the present invention includes a caulking step and a pre-load determination step. In the caulking process, caulking processing of the axial end portion of the hub wheel (or hub main body) is performed while rotationally driving the outer wheel with respect to the hub (or hub main body) in a manufacturing device. In the pre-load determination step, a change in rotation speed of the outer wheel is measured while the outer wheel is rotated only by inertia with respect to the hub and whether or not the pre-load of the hub unit bearing falls within an appropriate range is determined on the basis of the measured change in the rotation speed in the manufacturing device after the caulking step has ended.

The following configuration can be employed in the method of manufacturing a hub unit bearing according to the present invention. That is, in the pre-load determination step, a difference between the measured change in the rotation speed and the change in the rotation speed of the outer wheel rotated only by inertia when an optimum pre-load is applied to the hub unit bearing that has been investigated in advance is obtained, and the pre-load of the hub unit bearing is determined to fall within the appropriate range only when the difference is equal to or less than a preset threshold value.

The following configuration can be employed in the method of manufacturing a hub unit bearing according to the present invention. That is, in the caulking step, the caulking processing is performed under a processing condition in which the pre-load of the hub unit bearing is smaller than the optimum pre-load at the end of the caulking processing.

A method of manufacturing a vehicle according to the present invention is directed to a vehicle including a hub unit bearing, and the hub unit bearing is manufactured by the method of manufacturing a hub unit bearing according to the present invention.

An exemplary manufacturing device of a hub unit bearing includes an outer wheel driver, a caulking tool, a rotation speed sensor, and a pre-load determinator. The outer wheel driver can selectively switch between a state of rotationally driving the outer wheel with respect to the hub and a state of allowing the outer wheel to rotate only by inertia without rotational drive. The caulking tool can selectively switch between states of performing and not performing caulking processing of the axial end portion of the hub wheel. The rotation speed sensor can measure a change in rotation speed of the outer wheel rotated only by inertia. The pre-load determination unit determines whether or not a pre-load of the hub unit bearing falls within an appropriate range on the basis of the change in the rotation speed of the outer wheel rotated only by inertia measured by the rotation speed sensor.

The following configuration can be employed in the manufacturing device of a hub unit bearing according to the present invention. That is, the pre-load determinator has functions of obtaining a difference between the change in the rotation speed of the outer wheel rotated only by inertia measured by the rotation speed sensor and the change in the rotation speed of the outer wheel rotated only by inertia when an optimum pre-load is applied to the hub unit bearing that has been stored in advance, and determining the pre-load of the hub unit bearing to be within the appropriate range only when the difference is equal to or less than a preset threshold value.

### [Advantageous Effects of Invention]

According to the present invention, it is possible to cause the pre-load of the hub unit bearing to fall within an appropriate range.

### [Brief Description of Drawings]

Fig. 1 is a partial schematic view of a vehicle including a hub unit bearing (bearing unit).
Fig. 2 is a cross-sectional view showing a hub unit bearing according to a first example of an embodiment of the present invention.
Fig. 3 is a cross-sectional view showing a manufacturing device of the hub unit bearing according to the first example of the embodiment of the present invention in a state immediately before performing caulking processing.
Fig. 4 is a cross-sectional view showing the manufacturing device of the hub unit bearing according to the first example of the embodiment of the present invention in a state in which the caulking processing is performed.
Fig. 5 is a cross-sectional view showing the manufacturing device of the hub unit bearing according to the first example of the embodiment of the present invention in a state in which a rotation speed of an outer wheel is measured by a rotation speed sensor while the outer wheel is rotated only by inertia.
Fig. 6 is a view showing a relationship between a pre-load and a change in rotation speed of the outer wheel rotated only by inertia.
Fig. 7 is a view showing a relationship between a pre-load and an initial change in rotation speed of the outer wheel rotated only by inertia.
Fig. 8 is a view showing a relationship between an initial change in rotation speed of the outer wheel rotated only by inertia measured by the rotation speed sensor after first caulking processing and an initial change in rotation speed when an optimum pre-load is applied.
Fig. 9 is a view showing a relationship between an initial change in rotation speed of the outer wheel rotated only by inertia measured by the rotation speed sensor after second caulking processing and an initial change in rotation speed when an optimum pre-load is applied.
Fig. 10 is a view showing a relationship between an initial change in rotation speed of the outer wheel rotated only by inertia measured by the rotation speed sensor after third caulking processing and an initial change in rotation speed when an optimum pre-load is applied.
Fig. 11 is a line map showing a change in rotation speed of the outer wheel when the caulking step and the pre-load determination step are performed from the first time to the third time.

### [Description of Embodiments]

### [First example of embodiment]

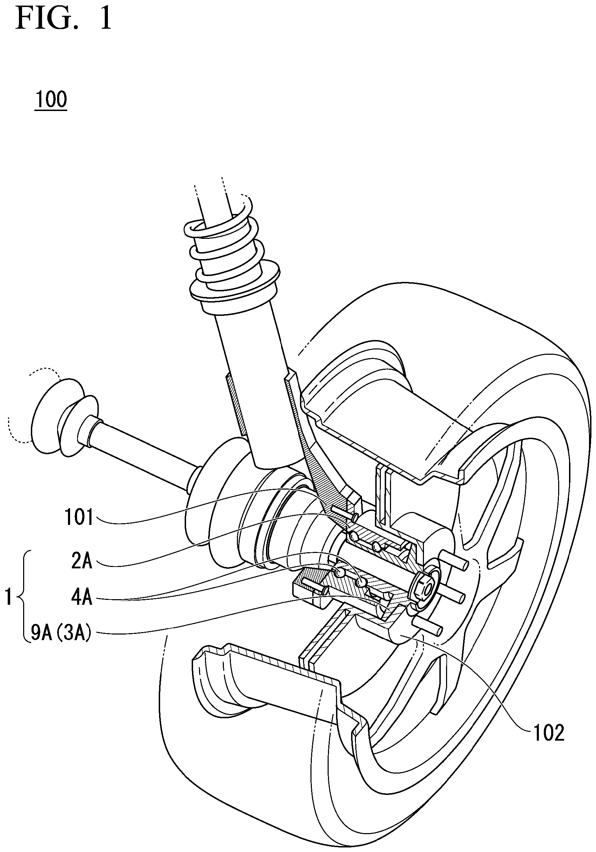

A first example of an embodiment of the present invention will be described with reference to Figs. 1 to 11.

Fig. 1 is a partial schematic view of a vehicle 100 including a hub unit bearing (bearing unit) 1. The present invention can be applied to any of a hub unit bearing for driving wheels and a hub unit bearing for driven wheels. In Fig. 1, the hub unit bearing 1 is for drive wheels and includes an outer wheel 2A, a hub 3A, and a plurality of rolling elements 4A. The outer wheel 2A is fixed to a knuckle 101 of a suspension system using bolts or the like. A wheel (and a rotating body for braking) 102 is fixed to a flange (rotating flange) 9A provided on the hub 3A using bolts or the like. Also, the vehicle 100 can have the same support structure as described above for the hub unit bearing 1 for driven wheels.

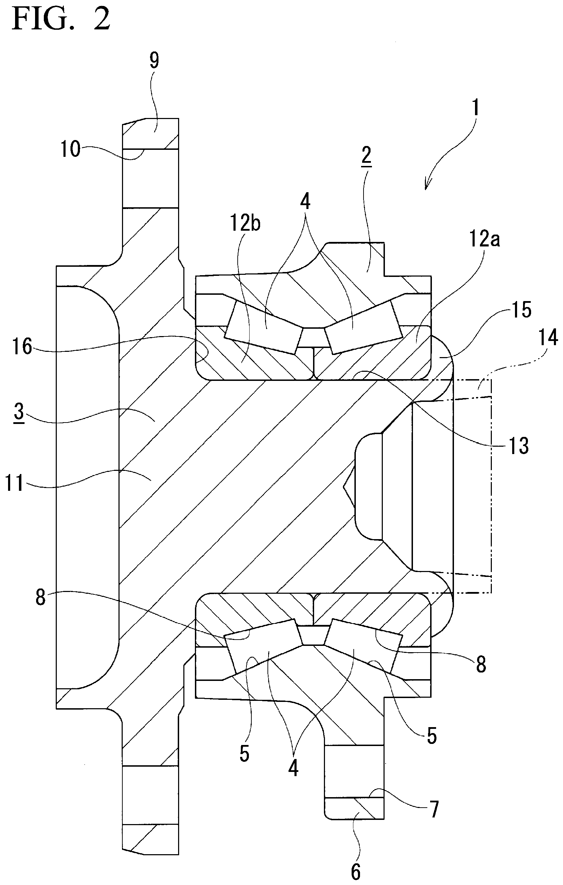

Fig. 2 shows the hub unit bearing (bearing unit) 1 for driven wheels. In the example of Fig. 2, the hub unit bearing 1 includes an outer wheel 2, a hub 3, and a plurality of rolling elements 4.

Also, regarding the hub unit bearing 1, an axially outer side is the left side in Fig. 2 which is an outer side in a width direction of a vehicle in a state in which it is assembled to the vehicle. An axially inner side is the right side in Fig. 2 which is on a center side in the width direction of the vehicle in a state in which the hub unit bearing 1 is assembled to the vehicle.

The outer wheel 2 includes a plurality of rows of outer wheel trajectories 5 on an inner circumferential surface and includes a stationary flange 6 protruding outward in a radial direction at an intermediate portion in the axial direction. The stationary flange 6 includes support holes 7 at a plurality of positions in a circumferential direction. The outer wheel 2 is coupled and fixed to a knuckle of a suspension system using knuckle bolts inserted or screwed into the support holes 7.

The hub 3 is disposed coaxially with the outer wheel 2 on an inner diameter side of the outer wheel 2 and includes a plurality of rows of inner wheel trajectories 8 on an outer circumferential surface. Further, the hub 3 includes a rotating flange 9 protruding outward in the radial direction at an axially outer side portion which protrudes outward in the axial direction with respect to the outer wheel 2. The rotating flange 9 includes attachment holes 10 at a plurality of positions in the circumferential direction. The wheel and the rotating body for braking are supported by and fixed to the rotating flange 9 using hub bolts press-fitted or screwed into the attachment holes 10.

The plurality of rolling elements 4 are disposed to be rollable in each of the rows between the plurality of rows of the outer wheel trajectories 5 and the plurality of rows of the inner wheel trajectories 8. Further, in the shown example, tapered rollers are used as the rolling elements 4. In another example, balls can be used as the rolling elements 4.

Also, the hub 3 includes a hub wheel (hub main body, unit main body) 11 and a pair of inner wheels 12a and 12b. The plurality of rows of the inner wheel trajectories 8 are provided on an outer circumferential surface of each of the pair of inner wheels 12a and 12b. The rotating flange 9 is provided on the axially outer portion of the hub wheel 11. Also, the hub wheel 11 includes a cylindrical fitting surface part 13 on an outer circumferential surface of an intermediate portion and an inner end portion in the axial direction. Further, the hub wheel 11 includes a stepped surface 16 facing the inner side in the axial direction on an outer end portion in the axial direction of the fitting surface part 13. The pair of inner wheels 12a and 12b are externally fitted to the fitting surface part 13 of the hub wheel 11 by press-fitting (interference fitting). In this state, a caulking part 15 is formed by caulking a cylindrical part (axial end) 14 provided at an inner end portion in the axial direction of the hub wheel 11 (by plastic deformation outward in the radial direction). An axially inner end surface of the inner wheel 12a on the axially inner side is pressed down by the caulking part 15. That is, by interposing the pair of inner wheels 12a and 12b between the stepped surface 16 of the hub wheel 11 and the caulking part 15, separation between the pair of inner wheels 12a and 12b and the hub wheel 11 can be prevented. Also, in this state, a pre-load in an appropriate range is applied to the hub unit bearing 1.

In the present example, in a state in which the hub unit bearing 1 is assembled before the caulking part 15 is formed (first assembly state), shapes and dimensions of respective members constituting the hub unit bearing 1 are restricted so that a pre-load smaller than a pre-load after the caulking part 15 is formed is applied. In the first assembly state, a plurality of rolling elements 4 are disposed to be rollable in each of the rows between the plurality of rows of the outer wheel trajectories 5 and the plurality of rows of the inner wheel trajectories 8, and the pair of inner wheels 12a and 12b are externally fitted on the fitting surface part 13 of the hub wheel 11 before the caulking part 15 is formed by press-fitting. Also, in the first assembly state, an axially outer end surface of the inner wheel 12b on the axially outer side is in contact with the stepped surface 16, and an axially outer end surface of the inner wheel 12a on the axially inner side is in contact with an axially inner end surface of the inner wheel 12b on the axially outer side. Thereafter, when the caulking part 15 is formed, an axial force from the caulking part 15 is applied to the inner wheel 12a on the axially inner side, thereby increasing the pre-load. The pre-load in a second assembly state in which the caulking part 15 is formed has a greater value compared to the pre-load in the first assembly state. An increment in the pre-load at this time is an amount according to a degree of processing of the caulking part 15, that is, an amount of caulking of the axially inner end portion of the hub wheel 11. The hub unit bearing 1 is manufactured such that the pre-load in a state in which such a caulking part 15 is formed (second assembly state) falls within an appropriate range (predetermined range).

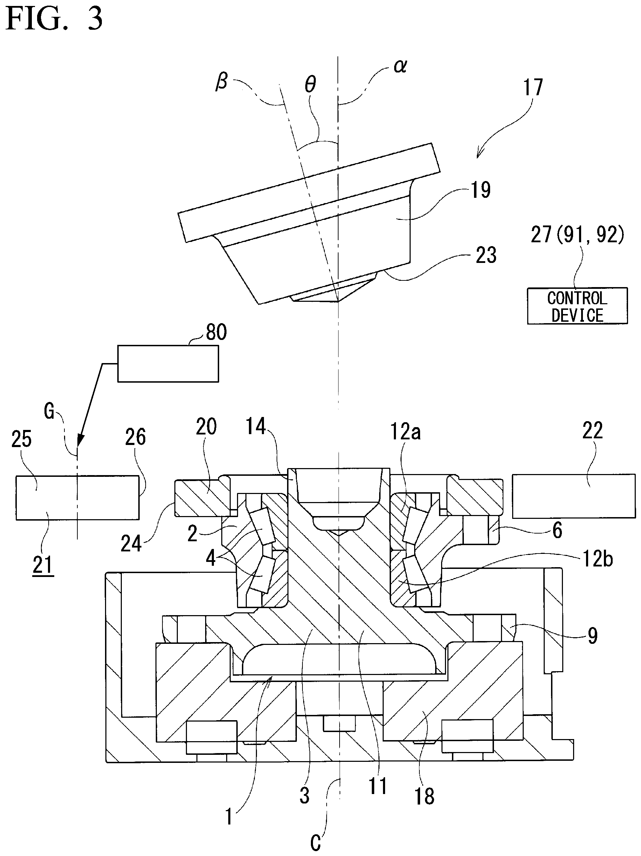

Next, a manufacturing device (a caulking device, a rotary caulking device) 17 of the hub unit bearing of the present example will be described. The manufacturing device 17 of the present example is for forming the caulking part 15 by caulking the cylindrical part 14 (Fig. 2) of the hub wheel 11. As shown in Figs. 3 to 5, such a manufacturing device 17 of the present example includes a support body (base) 18, a caulking die 19 serving as a caulking tool, a rotating body (rotating adapter, adapter) 20, an outer wheel driver (drive unit) 21, a rotation speed sensor (sensor) 22, and a control device 27.

The support body (base) 18 is for supporting the hub wheel 11 of the hub unit bearing 1 and has a reference axis C in a vertical direction. Also, the support body 18 has a shape on which the hub wheel 11 can be coaxially placed with the axially outer end portion of the hub wheel 11 directed downward.

The caulking die 19 is disposed above the support body 18. The caulking die 19 has a main axis α provided coaxially with the reference axis C of the support body 18 and a rotation axis β inclined at a predetermined angle θ with respect to the main axis α. Also, the caulking die 19 includes a processing surface part 23 having an annular shape centered on the rotation axis β at a distal end (lower end) thereof. The caulking die 19 as described above is provided to be vertically movable with respect to the support body 18. Further, the caulking die 19 can revolve (rotary rotation) around the main axis α and is rotatable around the rotation axis β with an electric motor (not shown) for the caulking die as a drive source.

The rotating body (adapter) 20 is fixed to the outer wheel 2 of the hub unit bearing 1 when the caulking part 15 is formed and rotates together with the outer wheel 2. The rotating body 20 is formed in an annular shape and is disposed coaxially with the outer wheel 2 around the axially inner portion of the outer wheel 2. Also, in a state in which the rotating body 20 is in contact with an axially inner surface of the stationary flange 6 constituting the outer wheel 2, the rotating body 20 is fixed to the outer wheel 2 by inserting or screwing coupling members such as bolts (not shown) into the support holes 7. Also, the rotating body 20 includes an outer circumferential portion on which a driven gear part 24 having a projected or indented shape along the circumferential direction is formed. Also, the rotating body 20 is made of a magnetic metal and is configured such that the driven gear part 24 can function as a part to be detected for detecting a rotation speed. In another example, the rotating body 20 is configured to rotate together with the outer wheel 2 in a state in which it is not substantially fixed to the outer wheel 2, for example, in a state in which a portion of the rotating body 20 is in contact with the outer wheel 2.

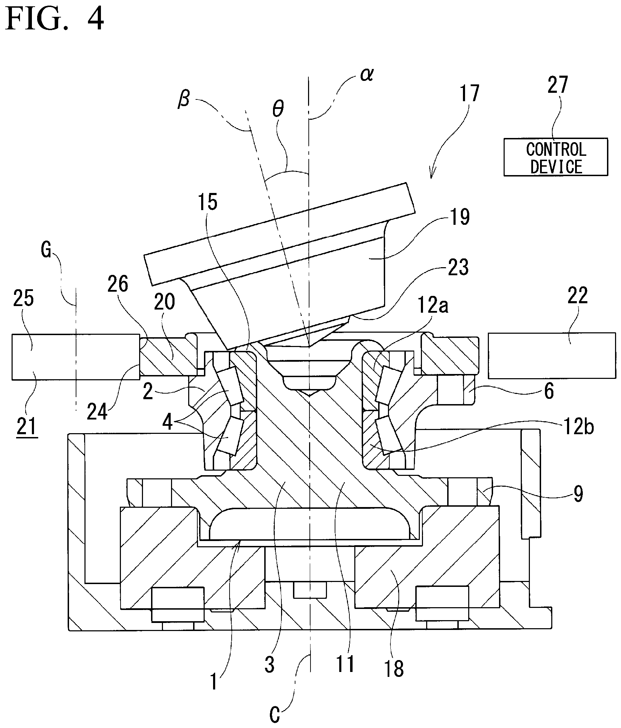

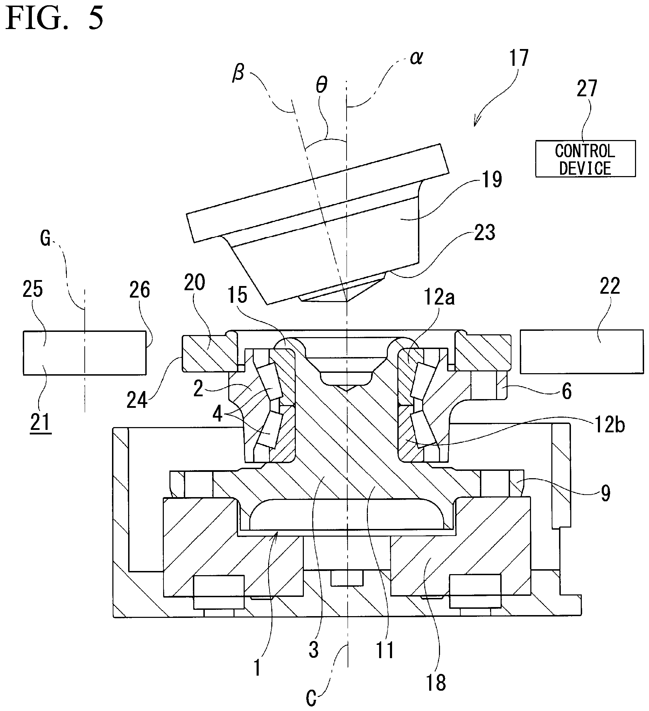

The outer wheel driver 21 is for rotationally driving the outer wheel 2 and includes a gear 25 and an outer wheel electric motor (drive motor, drive source) 80 (Fig. 3). The gear 25 is formed in a disc shape. Also, the gear 25 includes an outer circumferential portion on which a drive gear part 26 having a projected or indented shape along the circumferential direction is formed. The gear 25 as described above is disposed at a position facing the rotating body 20 fixed to the outer wheel 2 in the radial direction in a state in which a central axis G of the gear 25 is caused to coincide with the vertical direction. Also, the gear 25 is rotatable around its own central axis G with the outer wheel electric motor 80 as the drive source and is movable toward and away from the rotating body 20 in the radial direction. On the basis of the fact that the gear 25 is movable toward and away from the rotating body 20 in the radial direction, it is possible to switch between a state in which the drive gear part 26 is engaged with the driven gear part 24 to transmit a torque (Fig. 4) and a state in which the drive gear part 26 is separated from the driven gear part 24 (Figs. 3 and 5).

The rotation speed sensor 22 is for measuring a rotation speed of the outer wheel 2. In one example, when measuring at least the rotation speed of the outer wheel 2, the rotation speed sensor 22 is disposed at a position at which it closely faces the driven gear part 24 of the rotating body 20 fixed to the outer wheel 2 in the radial direction. For example, the rotation speed sensor 22 is a magnetic-type sensor, and a magnetic detection element such as a Hall IC or the like and a permanent magnet are incorporated in a detection part facing the driven gear part 24. When measuring the rotation speed of the outer wheel 2, when the rotating body 20 rotates together with the outer wheel 2, a convex part (tooth part) and a concave part (groove part) constituting the driven gear part 24 alternately pass in the vicinity of the detection part. As a result, due to the density of magnetic flux passing through the magnetic detection element changing periodically, an output signal of the rotation speed sensor 22 changes periodically. Since the frequency of the output signal at this time is proportional to the rotation speed of the outer wheel 2, the rotation speed of the outer wheel 2 can be obtained on the basis of the frequency of the output signal.

The control device 27 is for controlling an operation of the manufacturing device 17 and has a function of controlling movement of the caulking die 19 and the outer wheel driver 21, and a function of performing determination of a pre-load and setting of processing conditions to be described below. In the present example, the control device 27 functions as a pre-load determinator. The control device 27 can include, for example, a controller having a memory 91, a computer (a central processing unit (CPU), a processor, or a circuit) 92, and the like.

Next, a method of forming the caulking part 15 by subjecting the cylindrical part 14 (Fig. 2) of the hub wheel 11 to caulking processing in order to manufacture the hub unit bearing 1 of the present example will be described.

Further, an operation of forming the caulking part 15 is performed in a state in which the hub unit bearing 1 is assembled before the caulking part 15 is formed (first assembly state). Therefore, the hub unit bearing 1 is assembled in advance before the caulking part 15 is formed.

When forming the caulking part 15 using the manufacturing device 17 of the present example, first, as shown in Fig. 3, the hub wheel 11 is coaxially placed on the support body 18 with the axially outer end portion directed downward in a state in which the caulking die 19 is raised and the gear 25 is retreated radially outward. At the same time, the rotating body 20 is coaxially fixed to the outer wheel 2. In this state, the detection part of the rotation speed sensor 22 closely faces the driven gear part 24 of the rotating body 20 in the radial direction.

Next, the drive gear part 26 of the gear 25 is engaged with the driven gear part 24 of the rotating body 20 by bringing the gear 25 close to the rotating body 20. By rotationally driving the gear 25, the rotating body 20 and the outer wheel 2 are rotated with respect to the hub 3. At the same time, the caulking die 19 is rotated (rotary rotation) around the main axis α.

In this state, the cylindrical part 14 is subjected to the caulking processing by lowering the caulking die 19 and pressing the processing surface part 23 of the caulking die 19 against the cylindrical part 14 of the hub wheel 11, and thereby the caulking part 15 is formed (see Fig. 4). That is, a load is applied downward in the vertical direction and outward in the radial direction from the caulking die 19 to a portion in the circumferential direction of the cylindrical part 14. Also, the position to which the load is applied is continuously changed in the circumferential direction of the cylindrical part 14 as the caulking die 19 rotates around the main axis α. Thus, the caulking part 15 is formed by caulking the cylindrical part 14.

Particularly, in the present example, the above-described caulking processing is performed while determining the pre-load of the hub unit bearing in the middle thereof.

That is, in the present example, in order to determine the pre-load in the middle of the caulking processing shown in Fig. 4, the caulking die 19 is raised to eliminate a load applied from the caulking die 19 to the hub unit bearing 1 as shown in Fig. 5, and simultaneously with or after this, the gear 25 is retreated from the rotating body 20 to release the driving force applied from the gear 25 to the rotating body 20. Thereby, the outer wheel 2 (together with the rotating body 20 and the coupling member) is rotated only by inertia (inertial rotation). A change in the rotation speed (differential coefficient), which is a temporal change of the rotation speed of the outer wheel 2 at this time, is measured by the rotation speed sensor 22.

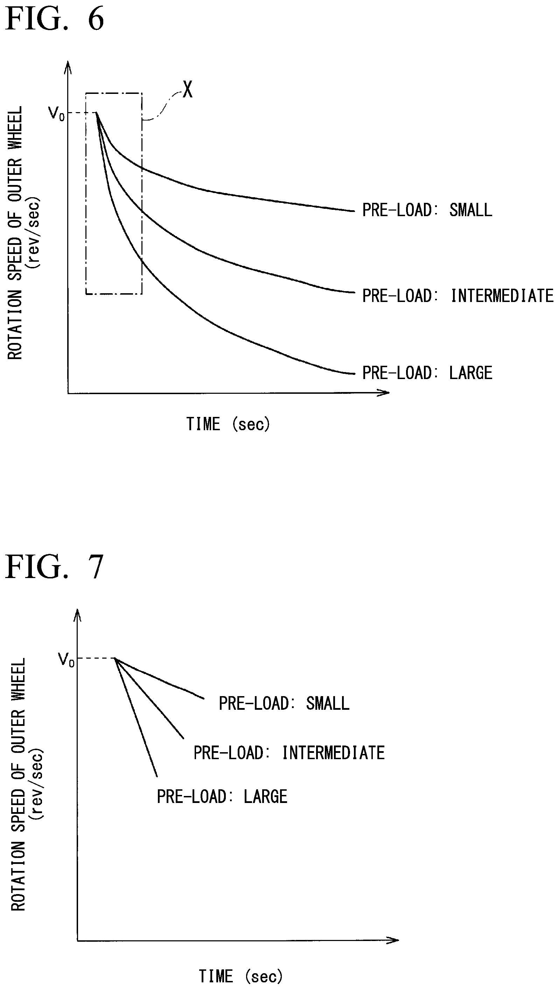

Here, a relationship between time and a rotation speed of the outer wheel 2 that rotates only by inertia differs for each pre-load of the hub unit bearing 1. Fig. 6 shows a conceptual diagram of the relationship. As shown in Fig. 6, the rotation speed of the outer wheel 2 rotated only by inertia changes (decreases) with the elapse of time, and the rate of change becomes greater as the pre-load of the hub unit bearing 1 (rolling resistance of the rolling elements 4) becomes greater. In other words, the change in the rotation speed of the outer wheel 2 rotated only by inertia corresponds to the pre-load. Therefore, in the present example, the pre-load of the hub unit bearing 1 is determined, that is, ascertained from the change in the rotation speed of the outer wheel 2 that rotates only by inertia.

Further, V₀ in Fig. 6 and Figs. 7 to 10 to be described below is the rotation speed of the outer wheel 2 at the time of performing the caulking processing (Fig. 4), and is the rotation speed (initial rotation speed) of the outer wheel 2 at the moment when the outer wheel 2 starts rotating only by inertia, that is, at the moment when the driving force applied to the rotating body 20 from the gear 25 is released. In the present example, V₀ is always the same magnitude.

In Fig. 7, the change in the rotation speed of the outer wheel 2 rotated only by inertia at the initial stage (immediately after the rotation is started only by inertia, that is, in the region X surrounded by the chain line in Fig. 6) (hereinafter, this may be simply referred to as an initial change in the rotation speed) is shown as an inclination of a straight line in coordinates representing a relationship between time and a rotation speed. Such an initial change in the rotation speed also differs for each pre-load as a matter of course. In order to complete the operation of forming the caulking part 15 at an early stage, it is desirable to finish the operation of pre-load determination in a short time. Therefore, in the present example, the pre-load is determined from the initial change in the rotation speed measured by the rotation speed sensor 22. Further, a length of the initial time can be arbitrarily set but is preferably set as small as possible within a range in which the change in the rotation speed can be measured with high accuracy.

In any case, in the present example, next, it is determined whether the pre-load ascertained from the initial change in the rotation speed measured by the rotation speed sensor 22 falls within an appropriate range. As a result, when it is found that the pre-load does not fall within the appropriate range, the caulking processing (Fig. 4) is resumed to further increase the degree of processing of the caulking part 15 (increment of the pre-load by the caulking part 15). Further, a rotation speed of the outer wheel 2 during the caulking processing at this time is also set to V₀. Thereafter, an initial change in the rotation speed of the outer wheel 2 rotated only by inertia is measured again (Fig. 5), and it is determined whether a pre-load ascertained from the measured change in the rotation speed falls within the appropriate range. In the present example, the caulking processing (Fig. 4) and the determination as described above are repeated until it is determined that the pre-load falls within the appropriate range. Then, when the pre-load falls within the appropriate range, the operation of forming the caulking part 15 is completed.

As described above, in the one example, a method of manufacturing the hub unit bearing 1 includes a step of supporting the hub wheel (hub main body) 11, a step of caulking the hub wheel 11 to which the inner wheels 12a and 12b and the outer wheel 2 are attached, a step of detecting a speed of inertial rotation of the outer wheel 2 by the sensor 22, and a step of comparing reference information on a change of the speed in the inertial rotation of the outer wheel 2 to measurement information on a change of the speed in the inertial rotation of the outer wheel 2 according to a detection result of the sensor 22. The control device 27 includes the memory 91 and the circuit 92 communicating with the sensor 22 and the memory 91. The control device 27 outputs the reference information on the change of the speed in the inertial rotation of the outer wheel 2 stored in the memory 91 and the measurement information on the change of the speed in the inertial rotation of the outer wheel 2 according to the detection result of the sensor 22. The output information can be displayed, for example, on a display (not shown). With regard to the change of the speed in the inertial rotation of the outer wheel 2, the reference information can include a lower limit value and an upper limit value according to an appropriate range of the pre-load in the hub unit bearing 1. The control device 27 can be configured to determine the appropriateness of the pre-load in the hub unit bearing 1 according to the reference information and the measurement information.

Next, the operation forming the caulking part 15 for causing the pre-load to fall within the appropriate range as described above will be described by taking a more specific example.

Further, in the present example, as a preparation for performing the operation of forming the caulking part 15 as described above, curves of changes in the rotation speed of the outer wheel 2 rotated only by inertia which are different for each pre-load as shown in Fig. 6 are obtained beforehand using a hub unit bearing 1 (master) whose pre-load is known. Further, initial changes in the rotation speed of these obtained curves are stored in a database as inclinations of straight lines as shown in Fig. 7. Then, this database is stored in the control device 27. This database is used to obtain conditions (processing load, processing time, rotary rotation speed, or the like) for a second and subsequent caulking processes to be described below.

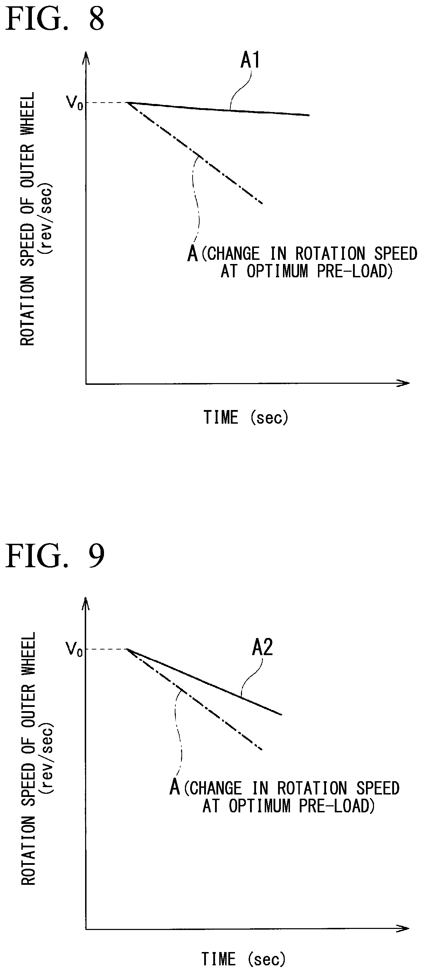

First, a first caulking step, that is, the caulking processing (Fig. 4) is performed. Conditions of the caulking processing at this time are adjusted so that the pre-load is not greater than an optimum pre-load. Further, a rotation speed of the outer wheel 2 during the caulking processing at this time is set to V0. Thereafter, a first pre-load determination step is performed. For this, first, an initial rotation speed change A1 of the first time is measured (Figs. 5 and 8). Next, a difference (A1-A) between the measured rotation speed change A1 and an initial rotation speed change A when the optimum pre-load is applied is obtained. Further, the difference (A1-A) is a difference in inclinations between the two straight lines A1 and A in Fig. 8. Next, whether the obtained difference (A1-A) is equal to or less than a threshold value ΔA {(A1-A) ≤ ΔA}, that is, whether or not the pre-load falls within the appropriate range is determined. When the pre-load falls within the appropriate range (when it is determined to be within), the operation of forming the caulking part 15 ends, and when the pre-load does not fall within the appropriate range (when it is not determined to be within), the operation of forming the caulking part 15 is continued. Here, it is assumed that the pre-load does not fall within the appropriate range.

Therefore, in order to continue the operation of forming the caulking part 15, conditions of the caulking processing (Fig. 4) for a second caulking step are obtained. Specifically, the conditions of the caulking processing are obtained such that the initial change in the rotation speed corresponding to the pre-load is slightly lower than or the same as the initial change in the rotation speed when the optimum pre-load is applied. When the conditions are obtained, the above-described database is utilized. For this, a relationship between the difference (A1-A) and conditions of the caulking processing for eliminating the difference (A1-A) obtained by conducting an experiment in advance or information for obtaining the conditions of the caulking processing to eliminate the difference (A1-A) by calculation is included in the above-described database.

Next, the second caulking step, that is, the caulking processing (Fig. 4) is performed under the conditions of the caulking processing obtained as described above. A rotation speed of the outer wheel 2 during the caulking processing at this time is also set to V₀. Thereafter, a second pre-load determination step is performed. For this, first, an initial rotation speed change A2 of the second time is measured (Figs. 5 and 9). Next, similarly to the first time, a difference (A2-A) between the measured rotation speed change A2 and the initial rotation speed change A when the optimum pre-load is applied is obtained. Next, whether the obtained difference (A2-A) is equal to or less than the threshold value ΔA {(A2-A) ≤ ΔA}, that is, whether or not the pre-load falls within the appropriate range is determined. When the pre-load falls within the appropriate range, the operation of forming the caulking part 15 ends, and when the pre-load does not fall within the appropriate range, the operation of forming the caulking part 15 is continued. Here, it is assumed that the pre-load does not fall within the appropriate range.

Therefore, in order to continue the operation of forming the caulking part 15, conditions of the caulking processing (Fig. 4) for a third caulking step are obtained. Specifically, the conditions of the caulking processing are obtained such that the initial change in the rotation speed corresponding to the pre-load is slightly lower than or the same as the initial change in the rotation speed when the optimum pre-load is applied. When the conditions are obtained, the above-described database is utilized.

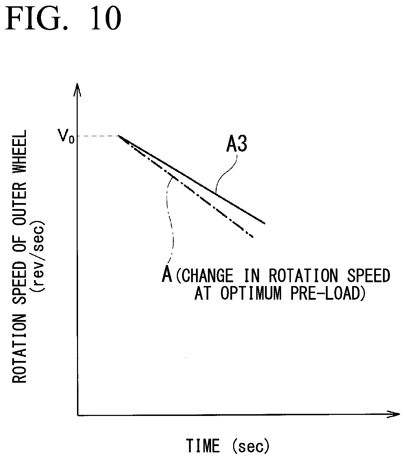

Next, the third caulking step, that is, the caulking processing (Fig. 4) is performed under the conditions of the caulking processing obtained as described above. A rotation speed of the outer wheel 2 during the caulking processing at this time is also set to V₀. Thereafter, a third pre-load determination step is performed. For this, first, an initial rotation speed change A3 of the third time is measured (Figs. 5 and 10). Similarly to the first time, a difference (A3-A) between the measured rotation speed change A3 and the initial rotation speed change A when the optimum pre-load is applied is obtained. Next, whether the obtained difference (A3-A) is equal to or less than the threshold value ΔA {(A3-A) ≤ ΔA}, that is, whether or not the pre-load falls within the appropriate range is determined. When the pre-load falls within the appropriate range, the operation of forming the caulking part 15 ends, and when the pre-load does not fall within the appropriate range, the operation of forming the caulking part 15 is continued (hereafter also, the caulking step and pre-load determination step are repeated until the pre-load falls within the proper range). Here, it is assumed that the pre-load falls within the appropriate range.

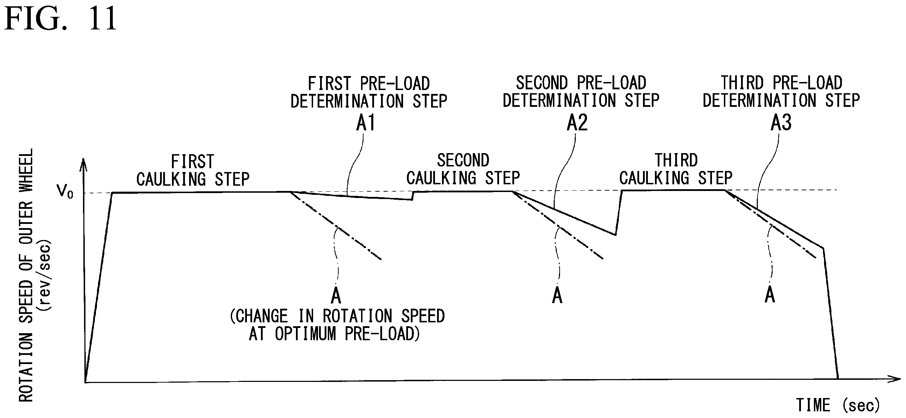

Therefore, the operation of forming the caulking part 15 ends, and the hub unit bearing 1 is taken out from the manufacturing device 17. Further, Fig. 11 shows changes in the rotation speed of the outer wheel 2 from the start to the end of the operation of forming the caulking part 15 described above.

As described above, in the present example, since the caulking processing for forming the caulking part 15 is performed while determining the pre-load of the hub unit bearing 1 in the middle thereof, it is possible to cause the pre-load to fall within the appropriate range.

Also, in the present example, since a method of gradually bringing the pre-load of the hub unit bearing 1 closer to an optimum pre-load while repeating the caulking step and the pre-load determination step is employed, for example, variations in pre-load of the hub unit bearing 1 after completion can be sufficiently reduced compared to a method of completing the operation of forming the caulking part 15 with performing the caulking processing only once for all the hub unit bearings 1 to be manufactured. Accordingly, even when manufacturing a hub unit bearing 1 in which the appropriate range of the pre-load is narrow, an applied pre-load can easily be within the appropriate range.

Also, in the present example, since the caulking step and the pre-load determination step from the first time to the third time (final time) can be performed without taking out the hub unit bearing 1 from the manufacturing device 17 in the middle or stopping rotation of the outer wheel 2 in the middle (see Fig. 11), the operation of forming the caulking part 15 can be efficiently performed.

The present invention is also applicable to a hub unit bearing having a structure in which a hub wheel and an inner wheel on an axially outer side are integrated, that is, a structure in which inner wheel trajectories on the axially outer side are formed directly on an outer circumferential surface of the hub wheel.

In the manufacturing device of the hub unit bearing of the present invention, as for the structure of the first example of the embodiment, a configuration in which the support body 18 moves in the vertical direction instead of the caulking die 19 moving in the vertical direction can also be employed.

The present invention is not limited to the method and the device for manufacturing a hub unit bearing as described in the first example of the embodiment in which the axial end portion of the hub wheel is caulked by the caulking die that is rotary-rotating, and can also be applied to a method and a device for manufacturing a hub unit bearing in which an axial end portion of the hub wheel is caulked by such caulking tools described in, for example, Japanese Patent Application, Publication No. 2017-18991, Japanese Patent Application, Publication No. 2017-67254, and Japanese Patent Application, Publication No. 2017-106510.

### [Reference Signs List]

1 Hub unit bearing
2 Outer wheel
3 Hub
4 Rolling element
5 Outer wheel trajectory
6 Stationary flange
7 Support hole
8 Inner wheel trajectory
9 Rotating flange
10 Attachment hole
11 Hub wheel
12a, 12b Inner wheel
13 Fitting surface part
14 Cylindrical part
15 Caulking part
16 Stepped surface
17 Manufacturing device
18 Support body
19 Caulking die
20 Rotating body
21 Outer wheel driver
22 Rotation speed sensor
23 Processing surface part
24 Driven gear part
25 Gear
26 Drive gear part
27 Control device

## Claims

1. A method of manufacturing a hub unit bearing (1) including:
supporting a hub main body (11);
caulking the hub main body (11), to which an inner wheel (12a, 12b) and an outer wheel (2) are attached, in a caulking step in which caulking processing of an axial end portion (14) of the hub main body (11) is performed while rotationally driving the outer wheel (2) with respect to the hub main body (11) in a manufacturing device,
wherein the method is **characterized in that**:
in the manufacturing device, after the caulking step has ended, a pre-load determination step is performed, in which a change in rotation speed of the outer wheel (2) is measured while the outer wheel (2) is rotated only by inertia with respect to the hub main body (11) and whether or not the pre-load of the hub unit bearing (1) falls within an appropriate range is determined on the basis of the measured change in the rotation speed.

2. The method according to claim 1, wherein, in the pre-load determination step,
a difference between the measured change in the rotation speed and the change in the rotation speed of the outer wheel (2) rotated only by inertia when an optimum pre-load is applied to the hub unit bearing (1) that has been investigated in advanced is obtained, and
the pre-load of the hub unit bearing (1) is determined to fall within the appropriate range only when the difference is equal to or less than a preset threshold value.

3. The method according to claim 1 or 2, wherein, in the caulking step, the caulking processing is performed under a processing condition in which the pre-load of the hub unit bearing (1) is smaller than an optimum pre-load at the end of the caulking processing.

4. The method according to any one of claims 1 to 3, wherein the caulking step and the pre-load determination step are repeated until the pre-load of the hub unit bearing (1) is determined to be within the appropriate range.

5. The method according to any one of claims 1 to 3, further comprising::
after the caulking, detecting a speed of inertial rotation of the outer wheel (2) with a sensor (22) while the outer wheel (2) is rotated substantially only by inertia; and
after the caulking, comparing reference information on a change in rotation speed of the inertial rotation of the outer wheel (2) and measurement information on a change in rotation speed of the inertial rotation of the outer wheel (2) according to a detection result of the sensor (22) in the inertial rotation of the outer wheel (2).

6. A method of manufacturing a vehicle (100) comprising a hub unit bearing (1), wherein the hub unit bearing (1) is manufactured by the method of manufacturing a hub unit bearing (1) according to any one of claims 1 to 5.

7. A manufacturing device of a hub unit bearing (1) comprising:
a base (18) that supports a hub main body (11);
a caulking die (19);
a driver (21);
a sensor (22); and
a control device (27) that includes a memory (91) and a circuit (92) communicating with the sensor (22) and the memory (91), **characterized in that**
the control device (27) is configured to perform the steps of:
- controlling the movement of the caulking die (19) and of the driver (21) to perform caulking the hub main body (11), to which an inner wheel (12a, 12b) and an outer wheel (2) are attached, while rotationally driving the outer wheel (2) with the driver;
after the caulking, detecting a speed of inertial rotation of the outer wheel (2) with the sensor (22) while rotating the outer wheel (2) substantially only by inertia; and
after the caulking, outputting reference information on a change of the speed in the inertial rotation of the outer wheel (2) stored in the memory (91) and measurement information on a change of the speed in the inertial rotation of the outer wheel (2) according to a detection result of the sensor (22) in the inertial rotation of the outer wheel (2).

8. The manufacturing device of a hub unit bearing according to claim 7, wherein the reference information includes a lower limit value and an upper limit value according to an appropriate range of a pre-load in the hub unit bearing (1) with regards to the change of the speed in the inertial rotation of the outer wheel (2).

9. The manufacturing device of a hub unit bearing according to claim 7 or 8, wherein the control device determines whether the pre-load in the hub unit bearing is appropriate on the basis of the reference information and the measurement information.

10. Use of the manufacturing device according to any one of claims 7 to 9 for manufacturing a hub unit bearing (1) of a vehicle (100).

## Patentansprüche

1. Verfahren zum Herstellen eines Nabeneinheitslagers (1), das einschließt:
Stützen eines Nabenhauptkörpers (11);
Verstemmen des Nabenhauptkörpers (11), an dem ein Innenrad (12a, 12b) und ein Außenrad (2) angebracht sind, in einem Verstemmschritt, in dem eine Verstemmbearbeitung eines axialen Endabschnitts (14) des Nabenhauptkörpers (11) durchgeführt wird, während das Außenrad (2) in Bezug auf den Nabenhauptkörper (11) in einer Herstellungsvorrichtung rotierend angetrieben wird,
wobei das Verfahren **dadurch gekennzeichnet ist, dass:**
in der Herstellungsvorrichtung, nach Abschluss des Verstemmschritts, ein Vorlastbestimmungsschritt durchgeführt wird, in dem eine Änderung der Rotationsgeschwindigkeit des Außenrads (2) gemessen wird, während das Außenrad (2) nur durch Trägheit in Bezug auf den Nabenhauptkörper (11) rotiert wird, und ob die Vorlast des Nabeneinheitslagers (1) innerhalb eines geeigneten Bereichs fällt oder nicht, auf der Grundlage der gemessenen Änderung der Rotationsgeschwindigkeit bestimmt wird.

2. Verfahren nach Anspruch 1, wobei in dem Vorlastbestimmungsschritt,
eine Differenz zwischen der gemessenen Änderung in der Rotationsgeschwindigkeit und der Änderung in der Rotationsgeschwindigkeit des Außenrads (2), das nur durch Trägheit rotiert wird, wenn eine optimale Vorlast auf das Nabeneinheitslager (1) ausgeübt wird, die im Voraus ermittelt wurde, erhalten wird und
die Vorlast des Nabeneinheitslagers (1) bestimmt wird, nur dann innerhalb des geeigneten Bereichs zu fallen, wenn die Differenz gleich oder geringer als ein voreingestellter Schwellenwert ist.

3. Verfahren nach Anspruch 1 oder 2, wobei in dem Verstemmschritt die Verstemmbearbeitung unter einer Bearbeitungsbedingung durchgeführt wird, bei der die Vorlast des Nabeneinheitslagers (1) kleiner als eine optimale Vorlast an dem Ende der Verstemmbearbeitung ist.

4. Verfahren nach einem der Ansprüche 1 bis 3, wobei der Verstemmschritt und der Vorlastbestimmungsschritt wiederholt werden, bis bestimmt wird, dass die Vorlast des Nabeneinheitslagers (1) innerhalb des geeigneten Bereichs liegt.

5. Verfahren nach einem der Ansprüche 1 bis 3, ferner umfassend:
nach dem Verstemmen, Erfassen einer Geschwindigkeit einer Trägheitsrotation des Außenrads (2) mit einem Sensor (22), während das Außenrad (2) im Wesentlichen nur durch Trägheit rotiert wird; und
nach dem Verstemmen, Vergleichen von Referenzinformationen über eine Änderung in der Rotationsgeschwindigkeit der Trägheitsrotation des Außenrads (2) und Messinformationen über eine Änderung in der Rotationsgeschwindigkeit der Trägheitsrotation des Außenrads (2) gemäß einem Erfassungsergebnis des Sensors (22) bei der Trägheitsrotation des Außenrads (2).

6. Verfahren zum Herstellen eines Fahrzeugs (100), umfassend ein Nabeneinheitslager (1), wobei das Nabeneinheitslager (1) durch das Verfahren zum Herstellen eines Nabeneinheitslagers (1) nach einem der Ansprüche 1 bis 5 hergestellt wird.

7. Herstellungsvorrichtung eines Nabeneinheitslagers (1), umfassend:
eine Basis (18), die einen Nabenhauptkörper (11) stützt;
eine Verstemmform (19);
einen Antrieb (21);
einen Sensor (22); und
eine Steuervorrichtung (27), die einen Speicher (91) und eine Schaltung (92) einschließt, die mit dem Sensor (22) und dem Speicher (91) kommuniziert, **dadurch gekennzeichnet, dass** die Steuervorrichtung (27) konfiguriert ist, um die Schritte durchzuführen:
- Steuern der Bewegung der Verstemmform (19) und des Antriebs (21), um das Verstemmen des Nabenhauptkörpers (11) durchzuführen, an dem ein Innenrad (12a, 12b) und ein Außenrad (2) angebracht sind, während das Außenrad (2) mit dem Antrieb rotierend angetrieben wird,
- nach dem Verstemmen, Erfassen einer Geschwindigkeit einer Trägheitsrotation des Außenrads (2) mit einem Sensor (22), während das Außenrad (2) im Wesentlichen nur durch Trägheit rotiert wird; und
- nach dem Verstemmen, Ausgeben von Referenzinformationen über eine Änderung der Geschwindigkeit in der Trägheitsrotation des Außenrads (2), die in dem Speicher (91) gespeichert sind, und Messinformationen über eine Änderung in der Geschwindigkeit in der Trägheitsrotation des Außenrads (2) gemäß einem Erfassungsergebnis des Sensors (22) bei der Trägheitsrotation des Außenrads (2).

8. Herstellungsvorrichtung für ein Nabeneinheitslager nach Anspruch 7, wobei die Referenzinformationen einen unteren Grenzwert und einen oberen Grenzwert gemäß einem geeigneten Bereich einer Vorlast in dem Nabeneinheitslager (1) in Bezug auf die Änderung der Geschwindigkeit in der Trägheitsrotation des Außenrads (2) einschließen.

9. Herstellungsvorrichtung eines Nabeneinheitslagers nach Anspruch 7 oder 8, wobei die Steuervorrichtung auf der Grundlage der Referenzinformationen und der Messinformationen bestimmt, ob die Vorlast in dem Nabeneinheitslager angemessen ist.

10. Verwendung der Herstellungsvorrichtung nach einem der Ansprüche 7 bis 9 zum Herstellen ein Nabeneinheitslagers (1) eines Fahrzeugs (100).

## Revendications

1. Procédé de fabrication d'un palier d'unité de moyeu (1) comportant :
le support d'un corps principal de moyeu (11) ;
le calfeutrage du corps principal de moyeu (11), auquel une roue interne (12a, 12b) et une roue externe (2) sont fixées, dans une étape de calfeutrage où un traitement de calfeutrage d'une portion d'extrémité axiale (14) du corps principal de moyeu (11) est effectué pendant l'entraînement en rotation de la roue externe (2) par rapport au corps principal de moyeu (11) dans un dispositif de fabrication,
dans lequel le procédé est **caractérisé en ce que :**
dans le dispositif de fabrication, après la fin de l'étape de calfeutrage, une étape de détermination de précharge est effectuée, où un changement de vitesse de rotation de la roue externe (2) est mesuré pendant que la roue externe (2) n'est mise en rotation que par inertie par rapport au corps principal de moyeu (11) et que le fait que la précharge du palier d'unité de moyeu (1) se situe ou non dans une plage appropriée est déterminé en fonction du changement mesuré de la vitesse de rotation.

2. Procédé selon la revendication 1, dans lequel, dans l'étape de détermination de précharge,
on obtient une différence entre le changement mesuré de la vitesse de rotation et le changement de la vitesse de rotation de la roue externe (2) mise en rotation que par inertie lorsqu'une précharge optimale est appliquée au palier d'unité de moyeu (1) qui a été étudié au préalable, et
la précharge du palier d'unité de moyeu (1) n'est déterminée pour se situer dans la plage appropriée que lorsque la différence est égale ou inférieure à une valeur seuil prédéfinie.

3. Procédé selon la revendication 1 ou 2, dans lequel, dans l'étape de calfeutrage, le traitement de calfeutrage est effectué dans une condition de traitement où la précharge du palier d'unité de moyeu (1) est inférieure à une précharge optimale à la fin du traitement de calfeutrage.

4. Procédé selon l'une quelconque des revendications 1 à 3, dans lequel l'étape de calfeutrage et l'étape de détermination de précharge sont répétées jusqu'à ce que la précharge du palier d'unité de moyeu (1) soit déterminée comme se situant dans la plage appropriée.

5. Procédé selon l'une quelconque des revendications 1 à 3, comprenant en outre :
après le calfeutrage, la détection d'une vitesse de rotation inertielle de la roue externe (2) avec un capteur (22) pendant que la roue externe (2) n'est mise en rotation essentiellement que par inertie ; et
après le calfeutrage, la comparaison d'informations de référence sur un changement de vitesse de rotation de la rotation inertielle de la roue externe (2) et d'informations de mesure sur un changement de vitesse de rotation de la rotation inertielle de la roue externe (2) selon un résultat de détection du capteur (22) dans la rotation inertielle de la roue externe (2).

6. Procédé de fabrication d'un véhicule (100) comprenant un palier d'unité de moyeu (1), dans lequel le palier d'unité de moyeu (1) est fabriqué par le procédé de fabrication d'un palier d'unité de moyeu (1) selon l'une quelconque des revendications 1 à 5.

7. Dispositif de fabrication d'un palier d'unité de moyeu (1) comprenant :
une base (18) qui supporte le corps principal de moyeu (11) ;
une matrice de calfeutrage (19) ;
un élément d'entraînement (21) ;
un capteur (22) ; et
un dispositif de commande (27) qui comporte une mémoire (91) et un circuit (92) communiquant avec le capteur (22) et la mémoire (91),
**caractérisé en ce que** le dispositif de contrôle (27) est configuré pour effectuer les étapes consistant à :
- contrôler le mouvement de la matrice de calfeutrage (19) et de l'élément d'entraînement (21) pour effectuer le calfeutrage du corps principal de moyeu (11), auquel une roue interne (12a, 12b) et une roue externe (2) sont fixées, pendant l'entraînement en rotation de la roue externe (2) avec l'élément d'entraînement,
- après le calfeutrage, la détection d'une vitesse de rotation inertielle de la roue externe (2) avec le capteur (22) pendant la mise en rotation de la roue externe (2) essentiellement que par inertie ; et
- après le calfeutrage, la délivrance d'informations de référence sur un changement de la vitesse de rotation inertielle de la roue externe (2) stockées dans la mémoire (91) et d'informations de mesure sur un changement de la vitesse de rotation inertielle de la roue externe (2) selon un résultat de détection du capteur (22) dans la rotation inertielle de la roue externe (2).

8. Dispositif de fabrication d'un palier d'unité de moyeu selon la revendication 7, dans lequel les informations de référence comportent une valeur limite inférieure et une valeur limite supérieure selon une plage appropriée d'une précharge dans le palier d'unité de moyeu (1) par rapport au changement de la vitesse de rotation inertielle de la roue externe (2).

9. Dispositif de fabrication d'un palier d'unité de moyeu selon la revendication 7 ou 8, dans lequel le dispositif de contrôle détermine si la précharge dans le palier d'unité de moyeu est appropriée en fonction des informations de référence et des informations de mesure.

10. Utilisation du dispositif de fabrication selon l'une quelconque des revendications 7 à 9 permettant de fabriquer un palier d'unité de moyeu (1) d'un véhicule (100).
